# EUROPEAN PATENT SPECIFICATION

(11) **EP 0 992 378 B1**
(45) Date of publication and mention of the grant of the patent: **18.07.2001**
(21) Application number: 99830578.3
(22) Date of filing: 14.09.1999
(51) Int. Cl.: B60H 1/32, F25B 39/04

(54) **A condenser for air conditioning systems for vehicles, having an integrated accumulator and a subcooling section**
Kondensator für Fahrzeugklimaanlagen mit integriertem Akkumulator und Unterkühlungssektion
Condenseur pour système de conditionnement d'air pour véhicules avec une section d'accumulateur et de sous-refroidissement intégrée

(30) Priority: 06.10.1998 IT TO980838
(43) Date of publication of application: 12.04.2000
(73) Proprietor: MAGNETI MARELLI CLIMATIZZAZIONE S.p.A., 10046 Poirino (Torino) (IT)
(72) Inventor: Parrino, Maurizio, Magneti Marelli Climatizza. Spa, I-10046 Poirino (Torino) (IT)
(74) Representative: Marchitelli, Mauro

(56) References cited:
- DE-A- 19 645 502
- US-A- 5 224 358
- US-A- 5 394 710

## Description

The present invention relates to a condenser for air conditioning systems for vehicles.

More precisely, the invention relates to a condenser of the type comprising:
- a plurality of tubes parallel to each other and connected to a pack of fins,
- a pair of distributors orthogonal to the tubes, each of which has an internal volume divided into a plurality of chambers communicating with respective ends of the tubes, and
- an accumulator integrally formed with the condenser and connected to one of said distributors,
wherein a part of the tubes are disposed, with reference to the direction of circulation of the fluid, upstream of the accumulator and form a condensing section and a part of the tubes are disposed downstream of the accumulator and form a subcooling section.

Solutions have already been proposed wherein the accumulator of the air conditioning system is integrated with the condenser. Examples of such solutions are disclosed in EP-A-0 668 986 and EP-A-0 480 330. These two documents disclose a condenser wherein one of the distributors is disposed in communication of fluid with an auxiliary tubular element which extends parallel to the distributor and which in use carries out the function of accumulator.

When the accumulator is disposed parallel to the distributors the transversal dimensions of the condenser increase and the installation of the condenser on many types of vehicles becomes difficult. On the other hand, with a different disposition of the accumulator which would reduce the transversal dimension it would be difficult to form a subcooling section disposed downstream of the accumulator.

The object of the present invention is to provide a condenser with a subcooling section and an integrated accumulator with a simple structure and a reduced dimension in a direction orthogonal to the distributors.

According to the present invention, this object is achieved by a condenser having the features forming the subject of claim 1.

The present invention now will be disclosed in detail with reference to the attached drawings, provided purely by way of non-limiting example, in which:
- figure **1** is a partially sectioned schematic view showing a condenser according to the present invention,
- figure **2** is a schematic view showing the distribution of the flow of fluid in the condenser of figure 1, and
- figure **3** is a cross-section taken along the line III-III of figure 1.

With reference to the drawings, the numeral reference 10 indicates a condenser for air conditioning systems for vehicles.

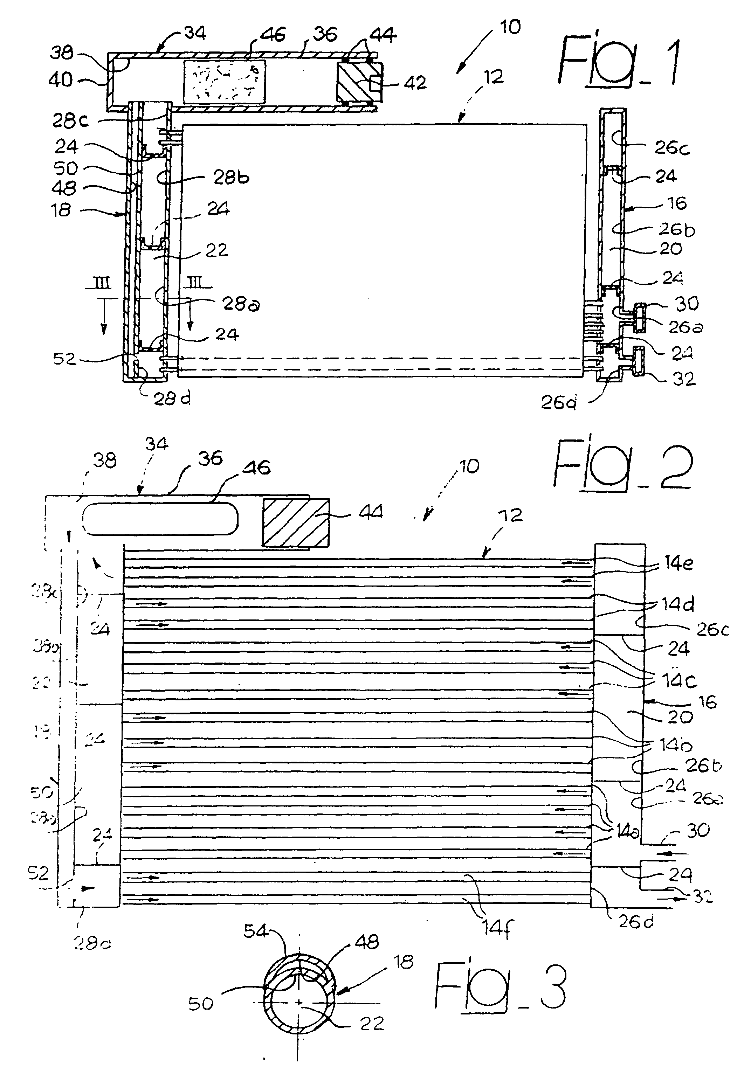

The condenser 10 comprises a heat exchanger core 12 including a plurality of tubes parallel to each other, indicated in figure 2 at 14a-14f. The tubes 14 are fixed in a conventional way to a pack of fins (not shown) extending transversally to the tubes and provided with aligned holes in which the tubes are fixed.

At the opposite ends of the heat exchanger core 12 a pair of distributors 16, 18 are disposed. Each distributor comprises an internal volume 20, 22 which is divided into a plurality of chambers, in series to each other, by a plurality of transversal baffles 24. In the example shown in the figures, both distributors 16, 18 have four chambers indicated respectively at 26a-26d and at 28a-28d. Chambers 26a and 26b of the distributor 16 are connected respectively to an inlet fitting 30 and to an outlet fitting 32.

The condenser 10 comprises an integrated accumulator 34 formed by a tubular element 36 disposed substantially transversally to the distributor 18, according to a general L-shaped configuration. The tubular element 36 is permanently fixed to the distributor 18, for instance by welding, and has its own ends closed respectively by a wall 40 and by a removable plug 42 having sealing o-rings 44. The accumulator 34 has an internal volume 38 which communicates with the chamber 28c of the distributor 18. A bag 46 of a material permeable to the fluid is housed in. the volume 18, the bag containing a dehydrating material in granules which has the purpose of eliminating eventual traces of water/humidity contained in the fluid which reaches the accumulator 34. A mechanical filter formed for instance by a net of plastics material (not shown) could also be arranged into the accumulator 34. The filter and the bag 46 containing the dehydrating material can be replaced after the removal of the plug 42.

The distributor 18 (the one which is connected to the accumulator 34) has an integral pipe 48 which is separated by a longitudinal wall 50 from the inner volume 22 in which the chambers 28a-28d are defined. The pipe 48 extends for the whole length of the distributor 18 and has a first end which communicates with the internal volume 38 of the accumulator 34. An aperture 52 is formed in the wall 50 and puts a second end of the pipe 48 in communication with the chamber farther away from the accumulator 34, indicated at 28d.

With reference in particular to figure 3, the distributor 18 is preferably formed by an extruded element with a circular cross-section forming the chamber 22 and an auxiliary arcuate wall 54 forming the pipe 48. The distributor 18 may have shapes different from the one shown in figure 3, provided that it has two longitudinal parallel pipes separated from each other by a continuous longitudinal wall. The distributor with double pipes could also be obtained by welding or by other means, but the extrusion represents the safest method from the point of view of leakages of coolant fluid.

In a usual manner, apertures are formed in the walls of the distributors 16, 18 and the ends of the tubes 14 are inserted and fixed into such apertures. The tool forming one of the apertures placed in correspondence with the chamber 28d may also be used for forming the aperture 52 which puts the pipe 48 in communication with the chamber 28d.

With reference to figure 2, the flow of cooling fluid enters in the condenser through the inlet fitting 30 and from chamber 26a of the distributor 16 reaches chamber 28a of the distributor 18 through the tubes 14a. From chamber 28a the fluid reaches chamber 26b through the tubes 14b. The fluid passes then in succession through the tubes 14c, 14d and 14e. The number of tubes decreases progressively for the various passages because the fluid condenses and its volume decreases. The tubes 14a-14e form the cooling and condensing section of the condenser 10. At the outlet of the tubes 14a the fluid passes from chamber 28c to the inner volume 38 of the accumulator 34, in which any remaining fluid still in a vapour state is separated from the liquid. From the accumulator 34 the fluid, completely in a liquid state, passes through the pipe 48 of the distributor 18 and reaches chamber 28d which communicates with the tubes 14f. These tubes form the subcooling section of the condenser 10 since the fluid in a liquid state which passes through the tubes 14f is subjected to a further cooling. The subcooled fluid exiting from the tubes 14f collects in chamber 26d and exits the condenser 10 through the outlet fitting 32.

From the preceding description it is evident that the distributor with double pipe enables the accumulator 34 to be disposed in a position which does not increase the dimensions of the condenser in the direction of the tubes and at the same time enables the formation of a subcooling section supplied with the fluid in a liquid state coming from the accumulator 34.

## Claims

1. A condenser for an air conditioning system for a vehicle, comprising:
- a plurality of tubes (14a-14f) parallel to each other and connected to a pack of fins,
- a pair of distributors (16, 18) orthogonal to the tubes (14a-14f), each of which has an internal volume (20, 22) divided into a plurality of chambers (26a-26d, 28a-28d) communicating with respective ends of the tubes, and
- an accumulator (34) integrally formed with the condenser and connected to one of said distributors (18),
wherein a part of the tubes (14a-14e) are disposed, with reference to the direction of circulation of the fluid, upstream of the accumulator (34) and form a condensing section and a part of the tubes (14f) are disposed downstream of the accumulator (34) and form a subcooling section,
characterized in that said accumulator (34) is disposed in a direction substantially orthogonal to the distributors (16, 18) and in that the distributor (18) which is connected to the accumulator (34) has an integral pipe (48) which puts the accumulator (34) in communication with the subcooling section (14f).

2. A condenser according to claim 1, characterized in that the distributor (18) which is connected to the accumulator (34) comprises a tubular element including a continuous longitudinal wall (50) which divides said pipe (48) from said chambers (28a-28d).

3. A condenser according to claim 1, characterized in that the accumulator (34) is formed by a tubular element (36) fixed at an end of said distributor (18) with a generally L-shaped configuration.

4. A condenser according to claim 2, characterized in that said pipe (48) has a first end communicating with the internal volume (38) of the accumulator (34) and a second end which communicates with the chamber (28d) of the distributor (18) farther away from the accumulator (34) through an aperture (52) formed in said continuous longitudinal wall (50).

## Patentansprüche

1. Kondensator für eine Fahrzeugklimaanlage, umfassend:
- eine Vielzahl von Rohren (14a-14f), die parallel zueinander und an ein Rippenpaket angeschlossen sind,
- ein Paar Verteiler (16, 18), die orthogonal zu den Rohren (14a-14f) sind und jeweils ein Innenvolumen (20, 22) aufweisen, das in eine Vielzahl von Kammern (26a-26d, 28a-28d) aufgeteilt ist, die mit jeweiligen Enden der Rohre in Verbindung stehen, und
- einen Akkumulator (34), der an den Kondensator angeformt und an einen der Verteiler (18) angeschlossen ist,
wobei ein Teil der Rohre (14a-14e) mit Bezug auf die Zirkulationsrichtung des Fluids stromaufwärts von dem Akkumulator (34) angeordnet ist und eine Verdichtungssektion bildet, und ein Teil der Rohre (14f) stromabwärts von dem Akkumulator (34) angeordnet ist und eine Unterkühlungssektion bildet,
dadurch gekennzeichnet, daß
der Akkumulator (34) in einer im wesentlichen orthogonalen Richtung zu den Verteilern (16, 18) angeordnet ist und der Verteiler (18), der an den Akkumulator (34) angeschlossen ist, eine integrierte Rohrleitung (48) aufweist, die eine Verbindung des Akkumulators (34) mit der Unterkühlungssektion (14f) herstellt.

2. Kondensator gemäß Anspruch 1, dadurch gekennzeichnet, daß der an den Akkumulator (34) angeschlossene Verteiler (18) ein rohrförmiges Element mit einer durchgehenden Längswand (50) umfaßt, die die Rohrleitung (48) von den Kammern (28a-28d) abteilt.

3. Kondensator gemäß Anspruch 1, dadurch gekennzeichnet, daß der Akkumulator (34) durch ein rohrförmiges Element (36) gebildet ist, das an einem Ende des Verteilers (18) in einer allgemein L-förmigen Anordnung befestigt ist.

4. Kondensator gemäß Anspruch 2, dadurch gekennzeichnet, daß die Rohrleitung (48) ein erstes Ende aufweist, das mit dem Innenvolumen (38) des Akkumulators (34) in Verbindung steht, und ein zweites Ende aufweist, das mit der Kammer (28d) des Verteilers (18) weiter weg von dem Akkumulator (34) durch eine in der durchgehenden Längswand (50) ausgebildete Öffnung (52) in Verbindung steht.

## Revendications

1. Condenseur pour système de conditionnement d'air pour véhicule, comprenant :
- plusieurs tubes (14a - 14f) parallèles entre eux et reliés à un empilement d'ailettes,
- deux distributeurs (16, 18) perpendiculaires aux tubes (14a - 14f), dont chacun présente un volume intérieur (20, 22) divisé en plusieurs chambres (26a - 26d, 28a - 28d) communiquant avec des extrémités respectives des tubes, et.
- un accumulateur (34) formé d'un seul bloc avec le condenseur et relié à l'un des distributeurs (18),
dans lequel une partie des tubes (14a - 14e) sont disposés en amont de l'accumulateur (34) par rapport à la direction de circulation du fluide et forment une section de condensation et une partie des tubes (14f) sont disposés en aval de l'accumulateur (34) et forment une section de refroidissement secondaire,
caractérisé en ce que l'accumulateur (34) est disposé suivant une direction sensiblement perpendiculaire aux distributeurs (16, 18) et en ce que le distributeur (18) qui est relié à l'accumulateur (34) comporte un tube (48) qui en fait partie intégrante et qui met l'accumulateur (34) en communication avec la section de refroidissement secondaire (14f).

2. Condenseur suivant la revendication 1, caractérisé en ce que le distributeur (18) qui est relié à l'accumulateur (34) comprend un élément tubulaire comportant une cloison longitudinale continue (50) qui sépare ledit tube (48) des dites chambres (28a - 28d).

3. Condenseur suivant la revendication 1, caractérisé en ce que l'accumulateur (34) est formé d'un élément tubulaire (36) fixé à une extrémité du distributeur (18) suivant une configuration dans l'ensemble en forme de L.

4. Condenseur suivant la revendication 2, caractérisé en ce que ledit tube (48) comporte une première extrémité communiquant avec le volume intérieur (38) de l'accumulateur (34) et une seconde extrémité qui communique avec la chambre (28d) du distributeur (18) la plus éloignée de l'accumulateur (34) par une ouverture (52) ménagée dans ladite cloison longitudinale continue (50).
